Europäisches Patentamt

European Patent Office

Office européen des brevets

(11) Publication number: **0 406 464 A1**

## EUROPEAN PATENT APPLICATION

(21) Application number: 89112286.3

(51) Int. Cl.⁵: **H01M 4/22, H01M 2/36**

(22) Date of filing: 05.07.89

The title of the invention has been amended (Guidelines for Examination in the EPO, A-III, 7.3).

(43) Date of publication of application:
**09.01.91 Bulletin 91/02**

(84) Designated Contracting States:
**AT BE CH DE ES FR GB GR IT LI LU NL SE**

(71) Applicant: **NESTE OY**
**Keilaniemi**
**SF-02150 Espoo(FI)**

(72) Inventor: **Kärnä, Toivo**
**Kuskintie 3**
**SF-06400 Porvoo(FI)**
Inventor: **Lind, Kalevi**
**Ylioppilaankatu 3 B 23**
**SF-33720 Tampere(FI)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Means for acid-filling and forming of batteries.**

(57) The present invention concerns a means for acid-filling and forming of storage batteries. The means comprises a frame which is arranged to combine several storage batteries (30) into a storage battery series. In said frame are produced duct systems (18-25) to be in direct contact with the cells (35) of each storage battery (30) fixed in said frame, for supplying acid simultaneously into each storage battery (30), and a circuit (13) for supplying the charging current, in which circuit the storage batteries (30) have been arranged to be coupled at their terminals when installing said storage batteries (30) into said frame. The means has advantageously been produced to be a united forming plate (10) in the frame whereof said duct systems (18,25) and the circuit (13) have been produced.

FIG. 1

## MEANS FOR ACID-FILLING AND FORMING

The present invention concerns a means for acid-filling and forming storage batteries.

In a storage battery finished in the assembly line requires acid-filling and thereafter forming, wherein the active material of said storage battery is converted into lead dioxide and lead with the aid of electric current. The forming is required to be performed in the storage battery immediately after the acid-filling. Said measures required earlier a lot of handwork and other manual activities because of which the acid-filling and forming of storage batteries have frequently created a significant bottleneck in the production line. Earlier for instance all initial activities related to the forming, such as electrical couplings and storage battery transmissions into forming racks have been performed manually. For that reason, the storage battery forming has furthermore constituted a considerable cost factor. To the storage battery formation have always been connected gasification and sometimes splashing of said acid, which in some instances may be quite vigorous. In the designs of prior art, the gasification has generated a considerable drawback with respect to occupational health because to the collection of gases and spalashes no sufficient attention has been paid.

The object of the present invention is to eliminate the drawbacks related to the state of art, and to provide an essential improvement in the designs known. For implementing said aims, the means of the invention is characterized in that the means comprises a frame which is arranged to bind several storage batteries together into a series, and in which frame a duct system has been formed, sais duct system being in direct contact with the cells of each storage battery fixed to said frame, for supplying acid simultaneously into each cell, and a circuit for supplying a charging current in which circuit the storage batteries have been arranged to be coupled at the terminals when installing said storage batteries to said frame.

Of the most outstanding advantages of the invention relative to the designs known in the art may be introduced e.g. the following. By using the means of the invention, it is feasible to automatize the acid-filling and forming of storage batteries so that both the acid-filling and forming can be performed simultaneously for a great number of storage batteries. The acid filling and the forming processes are herewith made substantially more rapid and flexible, because of which said measures no longer decelerate the manufacturing process of storage batteries. The means and the procedure of the invention moreover make it feasible that the encoding and product follow-up of storage batteries become substantially facilitated because e.g. the follow-up of the charging program can with the aid of the invention be carried out simultaneously fully automatically e.g. with a computer for a plurality of storage batteries. The acid-filling and forming processes can with the means of the invention be easily automatized. Also regarding occupational health, the means and the procedure of the invention introduce into the technology of prior art a significant improvement because in the design of the invention, the gases and splashes formed in the course of the forming process can be collected efficiently and filtered, and conducted away from the work spaces. The other advantages and characteristic features become obvious from the detailed description of the invention, whereto, however, the invention is not intended to be exclusively confined.

The invention is described in the following in detail referring to the example presented in the figures of the drawing attached.

Fig. 1 presents schematically the forming plate to be used in the procedure of the invention in bottom view.

Fig. 2 presents schematically the forming plate in top view and partly sectioned.

Fig. 3 presents in partial cross-sectional view the forming plate of the invention.

Fig. 4 presents schematically in parallel view the forming plate, whereto the plates have been fixed for acid-filling.

Fig. 5 presents an enlarged partial section of the forming plate at one acid-filling aperture of one storage battery.

Fig. 6 presents schematically different embodiment steps of the procedure of the invention.

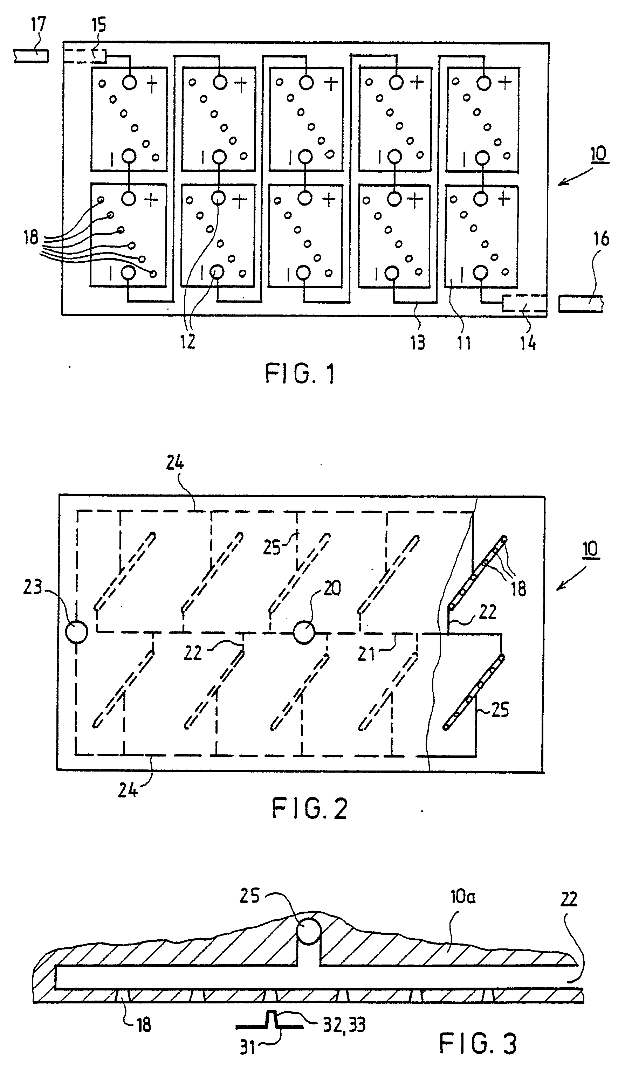

In Figs 1 and 2, the forming plate of the invention is in general indicated by reference numeral 10. The forming plate 10 is intended to fix a given number of storage batteries mechanically to the forming plate 10 during the acid-filling and forming processes. For said purpose, recesses 11 have been provided on the undersurface of said forming plate 10 for the storage batteries, and in addition, holes 12 have been produced on the undersurface of the forming plate 10, whereto the terminals of the storage batteries to be attached to said forming plate 10 have been intended enter. The forming plate 10 presented in Figs 1 and 2 is intended for a series of ten storage batteries. The holes 12 for the storage battery terminals have been coupled to one another with a circuit 13. In addition, electrode couplings 14,15 coupled to said circuit 13 have been produced in said forming plate 10, whereto the electrodes 16,17 of the charging circuit are intended to be connected for forming storage batteries. After the storage battery series has been coupled to said forming plate 10, the circuit 13 thus connects the storage batteries mutually in series in the embodiment of Fig. 1. The circuit 13 may, of course, be arranged in a manner deviating from Fig. 1, for instance in that the circuit is individually connected to each cell, or so that the circuit comprises a parallel connection.

The forming plate 10 is used, in addition to storage battery forming, also for acid-filling of said storage batteries, and this action is in addition to Figs 1 and 2 demonstrated in Figs 3-5. As is seen in said figures, acid-filling apertures 18 have been provided in the undersurface of the forming plate 10 for the cells of each storage battery 30 to be connected to said forming plate. Each of said acid-filling apertures 18 is connected to acid-filling ducts 22 produced within the frame 10a of said forming plate, said ducts being in turn all in contact with an acid-filling line 21, or the main line. On the upper surface of the forming plate 10 has in turn been produced an acid-filling aperture 20, opening into said acid-filling line 21. From the acid-filling aperture 20 the acid supplied into the forming plate 10 enters therefore along the acid-filling line 21 and the acid-filling ducts 22 into the acid-filling apertures 18 from which said acid is allowed to enter the cells of the storage batteries 30. In addition, on the upper surface of the forming plate 10 has been produced a sniffle aperture 23, opening into sniffle lines 24 produced in the frame 10a of the forming plate, and furthermore, therefrom through distribution lines 25 into each acid-filling duct 22 above said acid-filling apertures 18. When filling storage batteries 30 with acid, and forming the same, vapours and splashes are not consequently allowed to enter freely into the air, but they have been conducted in a controlled manner from the sniffle aperture 23 into the desired target. To the sniffle aperture 23 may advantageously been connected a gas collecting filter (not depicted), acting as collector filter for splashes, acid vapours and other gases so that said filter prevents acid vapours or free acid from escaping into the air. When storage batteries 30 have been connected to a forming plate 10, the acid-filling of said storage batteries is first carried out. For said purpose, a feed hole 27 or equivalent is connected to the acid-filling aperture 20 e.g. with a quick coupler 26, wherefrom the acid is conducted along the ducts produced in the frame 10a of said forming plate into the cells of each storage battery.

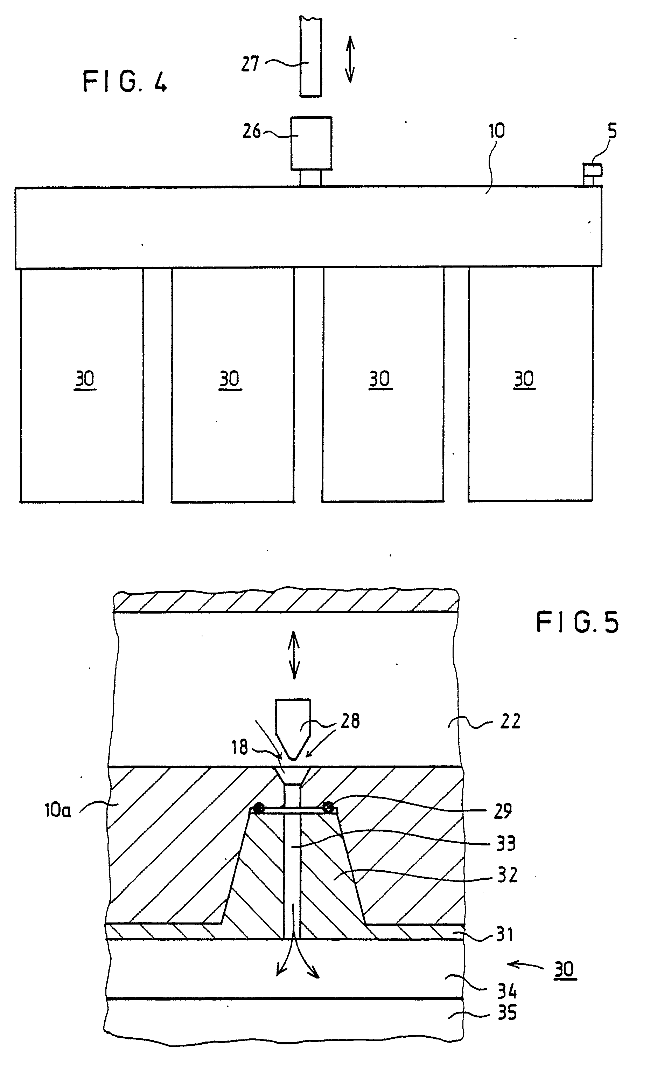

In Fig. 5 is presented a detailed sectional image of connecting one cell of one storage battery into the acid-filling aperture 18 of a forming plate. As shown in Fig. 5, the forming plate 10 is intended for such storage batteries 30 in which a projection 32 has been formed on the cover 31 of said storage battery at each cell 35, said projection inserting into the aperture provided for it in the frame 10a of said forming plate. In addition, said projection 32 is sealed with a sealing 29 into the frame 10a of the forming plate. In the projection 32 is formed an acid duct 33 which is in direct contact with a respective acid-filling aperture 18. The acid-filling apertures 18 located in the frame 10a of the forming plate have moreover been provided with a valve 28 presented schematically in Fig. 5, said valve dispensing the quantity of acid introduced into the cell 35 of the storage battery 30. The acid vapours produced in association with the forming of the storage battery 30 pass from the gas space 34 of the storage battery through the acid-filling aperture 18 into the acid-filling duct 22, and therefrom onwards along the sniffler lines 25 and 24 into a gas collecting filter possibly connected into the sniffler aperture 23.

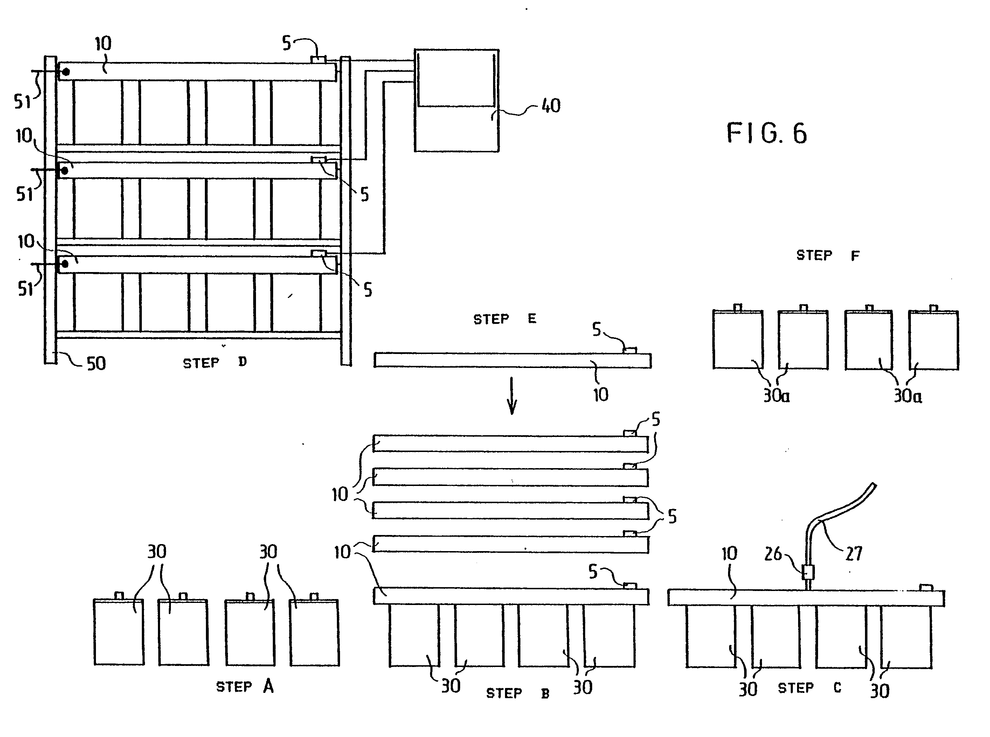

In Fig. 6 is presented the procedure of the invention in steps for acid-filling and forming of storage batteries. In step A, the storage batteries 30 are delivered from the storage battery assembly line into acid-filling and forming. In step B, a forming plate 10 is fixed to a storage battery series. When the forming plate 10 has been connected to the storage batteries 30, said storage battery series and the forming plate 10 pass into the acid-filling step (step C). In step C, an acid-filling hose is coupled to the forming plate 10 with a quick coupler 26, wherethrough storage battery acid is supplied into each storage battery 30 fixed to said forming plate 10. After the storage batteries 30 have been acid-filled, the forming plate 10 with the storage batteries 30 is moved into the forming step (step D). In step D, the forming plate 10 with the storage batteries 30 are installed to the forming rack 50. On the same rack 50, several forming plates 10 with their respective storage battery series may be installed. In the forming rack 50, the electrodes 16,17 presented in Fig.1 are coupled into the forming plates 10, whereby each forming plate is connected with the supply circuit 51 of the charging current. When a sufficient number of forming plates 10 with respective storage battery series have been placed on the forming rack 50, the charging current is connected to the supply circuit 51 of the charging current, and the forming of the storage batteries 30 is carried out.

As is moreover presented in the figures of the drawing, each forming plate is provided with an identification plate 5, this being in an appropriate manner connected to the circuit 13 of each forming plate 10. At the same time when the forming plates 10 are placed on the forming rack 50, each forming plate is through said identification plate 5 connected to a computer 40 with which forming process is monitored. After the forming of the storage batteries has been performed, the forming plates 10 are detached from said forming rack 50, and the forming plates 10 are with their storage batteries moved to the subsequent step (step E) in which the forming plate 10 is detached from the storage battery series, and the forming plate 10 is moved back to the installation step (step B) of the forming plate. Thereafter, the acid-filled and formed storage batteries 30a can be transferred into the packing department (step F).

As is presented in Fig. 6, the acid-filling and forming of the storage batteries 30 in the procedure of the invention have been carried out in the automatized line in which a series of storage batteries progresses stepwise from one step into another. The forming plate and the procedure of the invention facilitate the automation and enable the acid-filling and forming of the storage batteries 30 simultaneously for a comprehensive storage battery series automatically. In addition, the procedure of the invention enables an efficient identification and follow-up of the acid-filling and forming program for storage batteries 30 because the charging program is controlled with the aid of a computer 40. Each cell 30 may be encoded prior to its entrance into the acid-filling and forming process, for instance in association with the storage battery casting in that an individual encoding plate is provided on the cover of each storage battery. Hereby, the product follow-up can be managed substantially more efficiently than before, and with the procedure of the invention, the rejects can be removed from said series and from the production line immediately when the computer has informed that a storage battery series or in an individual storage battery is faulty.

The invention is described as an example referring to the figures of the drawing attached. Thereby, the invention is not intended to concern exclusively the example presented in the figures, and a plurality of modifications are feasible within the scope of the inventive idea presented in the claims following below.

The present invention concerns a means for acid-filling and forming of storage batteries. The means comprises a frame which is arranged to combine several storage batteries (30) into a storage battery series. In said frame are produced duct systems (18-25) to be in direct contact with the cells (35) of each storage battery (30) fixed in said frame, for supplying acid simultaneously into each storage battery (30), and a circuit (13) for supplying the charging current, in which circuit the storage batteries (30) have been arranged to be coupled at their terminals when installing said storage batteries (30) into said frame. The means has advantageously been produced to be a united forming plate (10) in the frame whereof said duct systems (18,25) and the circuit (13) have been produced.

## Claims

1. A means for acid-filling and forming of storage batteries, characterized in that the means comprises a frame which is arranged to combine together several storage batteries into a storage battery series, in which frame have been produced duct systems (18-25) to be in a direct contact with the cells (35) of each storage battery (30) fixed to said frame, for supplying an acid to each cell (30) simultaneously, and a circuit (13) for supplying the charging current, in which circuit said storage batteries (30) have been arranged to be coupled at the terminals when installing said storage batteries (30) in said frame.

2. Means according to claim 1, characterized in that said duct systems (18-25) comprise acid-filling apertures (18) opening from an acid-filling aperture (20) through an acid-filling line and a duct system (21,22) into the cells of each storage battery (30), and sniffler lines (24,25) opening from the acid-filling apertures (18) through a sniffler (23) out the means (10) for discharging and/or recovering acid vapours and acid splashes.

3. Means according to claim 1 or 2, characterized in that the circuit (13) is provided with connections (14,15), from which the acid-filling and forming means (10) can be connected to a supply circuit (51) of charging current external to said means, and with sensor elements (5) for the follow-up of the charging program.

4. Means according to any one of the preceding claims, characterized in that the circuit (13) provides a series or parallel connection between the storage batteries (30) coupled with said means (10).

5. Means according to any one of claims 1 to 3, characterized in that the circuit (13) comprises an individual connection for each storage battery (30).

6. Means according to any one of the preceding claims, characterized in that said means has been produced to be a united forming plate (10) in the frame whereof said duct systems (18,25) and the circuit (13) are produced.

7. Means according to claim 6, characterized in that on the undersurface of the forming plate (10) are produced grips (11,12) for fixing the forming plate (10) into the storage battery series.

8. Means according to claim 6 or 7, characterized in that said grips (11,12) comprise recesses (11) for storage batteries (30) as well as holes (12) for the terminals of said storage batteries (30).

FIG. 1

FIG. 2

FIG. 3

FIG. 4

27
26
10
5

30    30    30    30

FIG. 5

28
18
22
10a
29
33
32
31
30
34
35

FIG. 6

STEP F

STEP E

STEP D

STEP A

STEP B

STEP C

EP 0 406 464 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 6, no. 160 (E-126)[1038], 21st August 1982; & JP-A-57 078 769 (SHINKOUBE DENKI) --- | 1 | H 01 M 4/22 H 01 M 2/36 |
| A | DE-B-1 198 429 (YARDNEY INTERNATIONAL) * Figur 1; claim 1 * --- | 1 | |
| A | US-A-4 290 444 (BEVAN) --- | | |
| A | US-A-4 359 075 (EBERLE et al.) ----- | | |

TECHNICAL FIELDS SEARCHED (Int. Cl.5)

H 01 M
B 67 D
B 65 B

The present search report has been drawn up for all claims

| Place of search | Date of completion of the search | Examiner |
|---|---|---|
| THE HAGUE | 15-02-1990 | DEUTSCH J.P.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P0401)